# EUROPEAN PATENT APPLICATION

(11) **EP 3 486 456 A1**
(43) Date of publication of application: **22.05.2019**
(21) Application number: 17827457.7
(22) Date of filing: 30.06.2017
(51) Int. Cl.: F02C 7/18, B23K 26/00, B23K 26/16, B23K 26/362, F01D 25/12, F02C 7/00, F23R 3/42

(54) **GAS TURBINE ENGINE COOLING STRUCTURE AND METHOD FOR MANUFACTURING SAME**

(30) Priority: 15.07.2016 JP 2016140495
(71) Applicant: Kawasaki Jukogyo Kabushiki Kaisha, Kobe-shi, Hyogo 650-8670 (JP)
(72) Inventor: FUKUMOTO, Kenichiro, Akashi-shi Hyogo 673-8666 (JP); YAMASAKI, Yoshihiro, Akashi-shi Hyogo 673-8666 (JP); KINUGAWA, Masayoshi, Akashi-shi Hyogo 673-8666 (JP); TANIMURA, Kazuhiko, Akashi-shi Hyogo 673-8666 (JP); ISHIDA, Katsuhiko, Akashi-shi Hyogo 673-8666 (JP); TSURU, Tomoko, Akashi-shi Hyogo 673-8666 (JP); MURATA, Takayuki, Akashi-shi Hyogo 673-8666 (JP)
(74) Representative: dompatent von Kreisler Selting Werner - Partnerschaft von Patent- und Rechtsanwälten mbB
(86) International application number: PCT/JP2017/024222
(87) International publication number: WO 2018/012327

(57) **Abstract**

In a structure for cooling a constituent member of a gas turbine engine (GT) using a working gas (A) of the gas turbine engine as a cooling medium (CL), on a wall surface (13a) of a passage wall (13) formed from a part of the constituent member and facing a cooling medium passage through which the cooling medium (CL) flows, a recess (21) formed on the wall surface of the passage wall and a projection (23) formed on at least a part of a peripheral edge of the recess are provided.

## Description

### CROSS REFERENCE TO THE RELATED APPLICATION

This application is based on and claims Convention priority to Japanese patent application No. 2016-140495, filed July 15, 2016, the entire disclosure of which is herein incorporated by reference as a part of this application.

### BACKGROUND OF THE INVENTION

### (Field of the Invention)

The present invention relates to a structure for cooling a member constituting a gas turbine engine, and a manufacturing method therefor.

### (Description of Related Art)

In recent years, in a gas turbine engine, it has been desired that the amount of air for combustion is increased to suppress increase in flame temperature, for the purpose of suppressing generation of NOx due to high-temperature combustion. Accordingly, in order to decrease the amount of air (cooling air) that does not contribute to combustion itself, improvement in convection cooling performance of a constituent member which is to be exposed to high temperature has been attempted. As a cooling structure for such a constituent member, e.g., a combustor liner, it is known that, on the outer circumferential surface of the combustor liner, a plurality of dents are formed, or protrusions such as ribs are provided (see Patent Literature 1), for example. When recesses/projections are formed on a cooling target surface as described above, compressed air used as a cooling medium effectively causes turbulent flow and heat transfer is enhanced, whereby cooling performance is improved.

### [Related Document]

### [Patent Document]

[Patent Document 1] JP Laid-open Patent Publication No. 2006-63984

### SUMMARY OF THE INVENTION

However, merely providing simple dents or ribs on the cooling target surface does not provide sufficient cooling performance. In addition, conventionally, such recesses/projections are formed by precision casting, mechanical working, additional provision of a rod-like member, or the like, and therefore the cost increases and in addition, it is difficult to form recesses/projections having complicated shapes.

In order to solve the above problem, an object of the present invention is to provide a gas turbine engine cooling structure having recesses/projections that provide excellent convection cooling performance. Another object of the present invention is to provide a manufacturing method capable of manufacturing a cooling structure having an arbitrary recess/projection shape at low cost.

In order to attain the above objects, a gas turbine engine cooling structure according to the present invention is a structure for cooling a constituent member of a gas turbine engine using a working gas of the gas turbine engine as a cooling medium, the structure including:
a passage wall formed from a part of the constituent member and facing a cooling medium passage through which the cooling medium flows;
a recess formed on a wall surface of the passage wall; and
a projection formed on at least a part of a peripheral edge of the recess.

In the above configuration, by forming a projection on the peripheral edge of a recess in combination with the recess, occurrence of turbulent flow of the cooling medium flowing into the recess and flowing out from the recess is enhanced, and thus excellent cooling performance is obtained.

In the cooling structure according to one embodiment of the present invention, the projection may be formed on only a peripheral edge, of the recess, that is positioned on an upstream side in a flow direction of the cooling medium. In the above configuration, occurrence of turbulent flow is enhanced inside the recess, whereby the wall surface can be effectively cooled.

In the cooling structure according to one embodiment of the present invention, the projection may be formed on only a peripheral edge, of the recess, that is positioned on a downstream side in a flow direction of the cooling medium. In the above configuration, occurrence of turbulent flow is enhanced at the downstream part of the recess, whereby the wall surface can be effectively cooled.

A manufacturing method according to the present invention is a method for manufacturing a structure for cooling a metallic constituent member of a gas turbine engine using a working gas of the gas turbine engine as a cooling medium, the method including irradiating, with a laser beam, a passage wall that is formed from a part of the constituent member and faces a cooling medium passage through which the cooling medium flows, and jetting an assist gas to an area irradiated with the laser beam, to remove melted metal, thereby forming a recess on a wall surface of the passage wall. In one embodiment of the manufacturing method as described above, further, the melted metal removed by jetting the assist gas may be caused to remain on at least a part of a peripheral edge of the recess, thereby forming a projection.

In the above configuration, it is possible to easily form the recess by performing irradiation with the laser beam and jetting the assist gas to metal melted by the irradiation. In addition, by adjusting the condition for jetting the assist gas, it is possible to form the projection around the recess. In addition, by adjusting the laser irradiation condition, the recess having an arbitrary shape is easily obtained. Further, since the process is performed using laser, it is possible to form recesses/projections easily and within a short time on not only a plate-like constituent member but also various types of members such as rod-like constituent member or molded product.

In the manufacturing method according to one embodiment of the present invention, the assist gas may be jetted in a direction inclined with respect to the wall surface of the passage wall, so as to form the projection on only a part of the peripheral edge of the recess. The above configuration makes it possible to optionally set the position and protruding height of the projection formed by melted metal, by adjusting the jetting direction and angle of the assist gas.

In the manufacturing method according to one embodiment of the present invention, the passage wall may be irradiated with the laser beam via a beam shape forming member. The above configuration makes it possible to optionally set a shape in plan view of the recess, using the beam shape forming member.

In the manufacturing method according to one embodiment of the present invention, further, blasting may be performed on a surface of the recess. The above configuration makes it possible to effectively prevent occurrence of a crack in the surface of the recess formed by solidification of melted metal.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a partially cutaway side view showing the schematic structure of a gas turbine engine to which a cooling structure according to one embodiment of the present invention is applied;
Fig. 2 is a sectional view schematically showing the schematic structure of the cooling structure according to one embodiment of the present invention;
Fig. 3 is a plan view schematically showing the schematic structure of the cooling structure according to one embodiment of the present invention;
Fig. 4 is a plan view showing an example of the shape of a recess in the cooling structure according to one embodiment of the present invention;
Fig. 5 is a plan view showing an example of the shape of a recess in the cooling structure according to one embodiment of the present invention;
Fig. 6 is a plan view showing an example of the shape of a recess in the cooling structure according to one embodiment of the present invention;
Fig. 7 is a sectional view showing an example of the shapes of a recess and a projection in the cooling structure according to one embodiment of the present invention;
Fig. 8 is a plan view showing an example of the arrangement manner of recesses in the cooling structure according to one embodiment of the present invention;
Fig. 9 is a plan view showing an example of formation of a projection in the cooling structure according to one embodiment of the present invention;
Fig. 10 is a plan view showing an example of formation of a projection in the cooling structure according to one embodiment of the present invention;
Fig. 11 is a sectional view showing the schematic structure of an example of a laser irradiation device used in a cooling structure manufacturing method according to one embodiment of the present invention;
Fig. 12 is a sectional view showing the schematic structure of an example of a laser irradiation device used in the cooling structure manufacturing method according to one embodiment of the present invention; and
Fig. 13 is a sectional view showing the schematic structure of an example of a laser irradiation device used in the cooling structure manufacturing method according to one embodiment of the present invention.

### DESCRIPTION OF EMBODIMENTS

Hereinafter, embodiments of the present invention will be described with reference to the drawings, but the present invention is not limited to the embodiments.

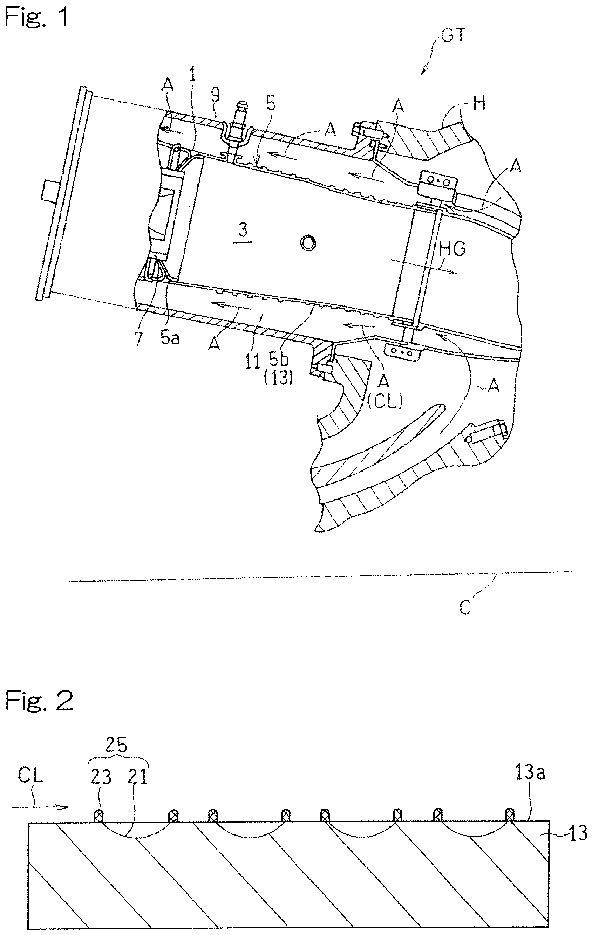

Fig. 1 is a partially cutaway side view of a gas turbine engine (hereinafter, simply referred to as gas turbine) GT having a cooling structure according to one embodiment of the present invention. In the gas turbine GT, an air A introduced from the outside is compressed by a compressor (not shown) and introduced into a combustor 1, a fuel is combusted together with the compressed air A in the combustor 1, and a turbine (not shown) is driven by the obtained combustion gas HG having a high temperature and a high pressure. The combustor 1 is disposed so as to be slightly inclined with respect to an axis C of the compressor and the turbine.

The combustor 1 includes a cylindrical combustor liner 5 forming a combustion chamber 3 therein, and a burner unit 7 which is attached to a top wall (wall of most upstream portion) 5a of the combustor liner 5 and injects a fuel-air mixture of the fuel and the air A into the combustion chamber 3. The combustor liner 5 and the burner unit 7 are housed so as to be arranged concentrically in a cylindrical combustor casing 9 which is an outer casing of the gas turbine combustor 1. In the shown example, the combustor 1 is of a reverse flow can type, and the compressed air A flows toward the head portion (burner unit 7 side) of the combustor 1 through a supply passage 11 for the compressed air A, which is formed by a space between the combustor casing 9 and the combustor liner 5.

In the present embodiment, a constituent member of the gas turbine GT is cooled by convection using, as a cooling medium CL, the air A which is a working gas for the gas turbine GT. In the following description, a structure for cooling the combustor liner 5, which may be one example of the constituent member that is a convection cooling target, will be described.

A circumferential wall 5b of the combustor liner 5 forms a passage wall 13 of the supply passage 11. As shown in Fig. 2, the passage wall 13 has a wall surface 13a formed with multiple recesses 21. A projection 23 is formed on the peripheral edge of each recess 21. The term "recess" used herein is defined as a portion recessed relative to the wall surface 13a of the passage wall 13, and the term "projection" used herein is defined as a portion protruding relative to the wall surface 13a of the passage wall 13. The phrase "the projection is formed on the peripheral edge of the recess" means that no wall surface 13a of the passage wall 13 is interposed between the recess 21 and the projection 23. Hereinafter, a combination of each recess 21 and each projection 23 on the peripheral edge of the recess 21 is referred to as a heat transfer enhancement portion 25. The cooling medium CL collides with the multiple heat transfer enhancement portions 25, whereby the passage wall 13 is cooled by convection. That is, the supply passage 11 (Fig. 1) forms a cooling medium passage through which the cooling medium CL flows, and the recesses 21 and the projections 23 are formed on the wall surface 13a of the passage wall 13 which faces the cooling medium passage.

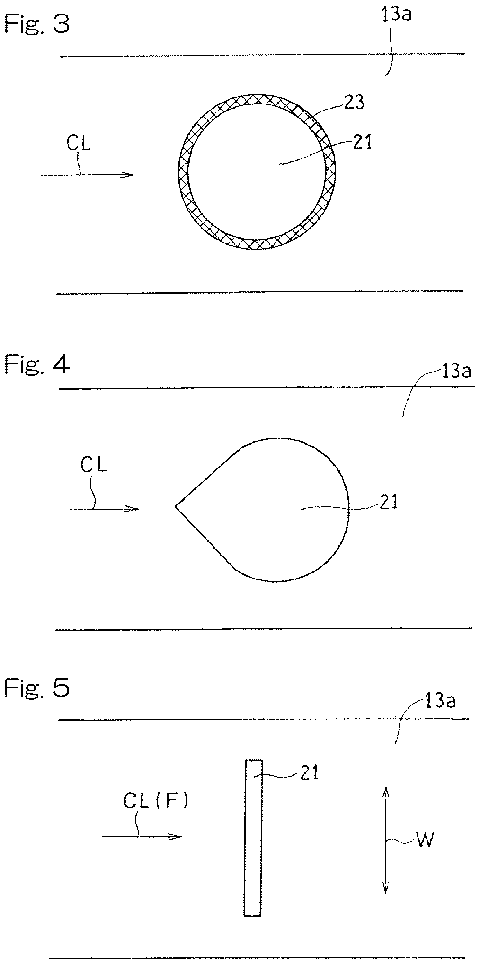

In this example, as shown in Fig. 3, a shape in plan view of each recess 21 is almost a round shape and the projection 23 indicated by cross-hatching is provided over the entire peripheral edge of the recess 21. As shown in Fig. 2, the sectional shape of the recess 21 is almost an arc shape. The shape in plan view of the recess 21 may be an elliptic shape.

The shape of the recess 21 is not limited to the above example. Figs. 4 and 5 show other examples of the shape in plan view of the recess 21. It is noted that Figs. 4 and 5 are for showing only the shape in plan view of the recess 21 alone, and therefore the projection 23 is not shown. The shape in plan view of the recess 21 may be a teardrop shape shown in Fig. 4. Alternatively, the shape in plan view of the recess 21 may be a shape, such as a star shape, obtained by combining a plurality of large bent shapes. Even the recess 21 having a complicated shape in plan view such as a star shape can be created by a manufacturing method which will be described later.

The shape in plan view of each recess 21 may be a groove shape extending elongatedly. For example, the shape in plan view of each recess 21 may be a groove shape extending in a straight line as shown in Fig. 5. Alternatively, the shape in plan view of each recess 21 may be a groove shape extending in an arc shape, a wavy line shape, a saw-tooth shape, or the like.

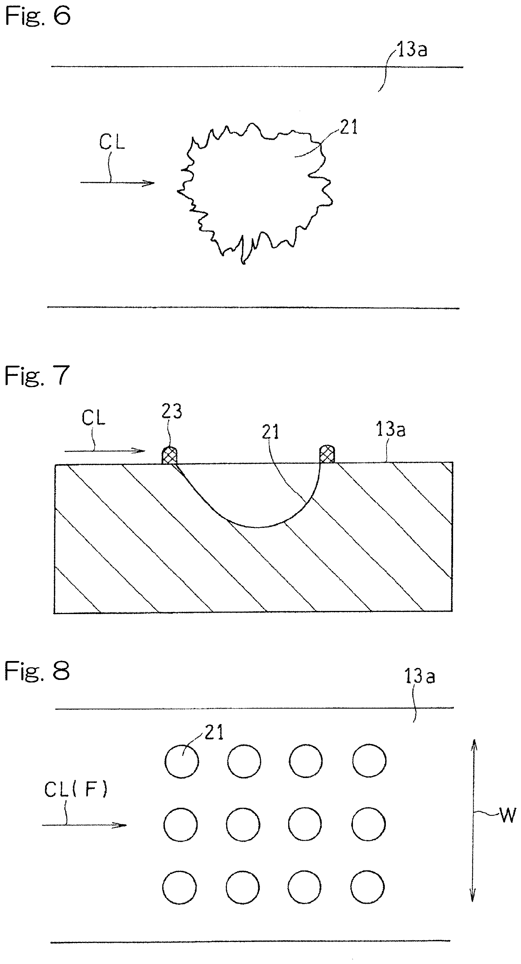

The shape in plan view of each recess 21 is not limited to a shape formed by a contour line that is a continuous (smooth) curved or straight line, but may be a shape formed by an irregularly bent contour line as shown in Fig. 6. The contour line of the shape in plan view of each recess 21 so as to be bent irregularly further enhances occurrence of turbulent flow of the cooling medium, as compared to the recess 21 having a continuous contour line.

The sectional shape of each recess 21 is not limited to the arc shape shown in Fig. 2, but may be a mortar shape, a teardrop shape shown in Fig. 7, or the like.

Regarding the arrangement manner of the plurality of recesses 21, as shown in Fig. 8, the recesses 21 may be arranged in a matrix shape in two directions perpendicular to each other on the wall surface 13a. In the shown example, the plurality of recesses 21 are arranged in a matrix shape in a flow direction F of the cooling medium CL (hereinafter, simply referred to as "flow direction") and a passage width direction W perpendicular to the flow direction F (hereinafter, simply referred to as "width direction"). It is noted that the arrangement manner of the plurality of recesses 21 is not limited to the above example. For example, the plurality of recesses 21 may be arranged in a staggered shape.

Regarding the arrangement manner of the recesses 21 having a shape in plan view that is an elongated groove shape as shown in Fig. 5, for example, the plurality of recesses 21 extending in the same range in the width direction W may be arranged at regular intervals along the flow direction F, or the plurality of recesses 21 may be arranged such that the positions thereof in the width direction W are displaced from each other alternately along the flow direction F. The extending direction of each recess 21 may be inclined with respect to the width direction W.

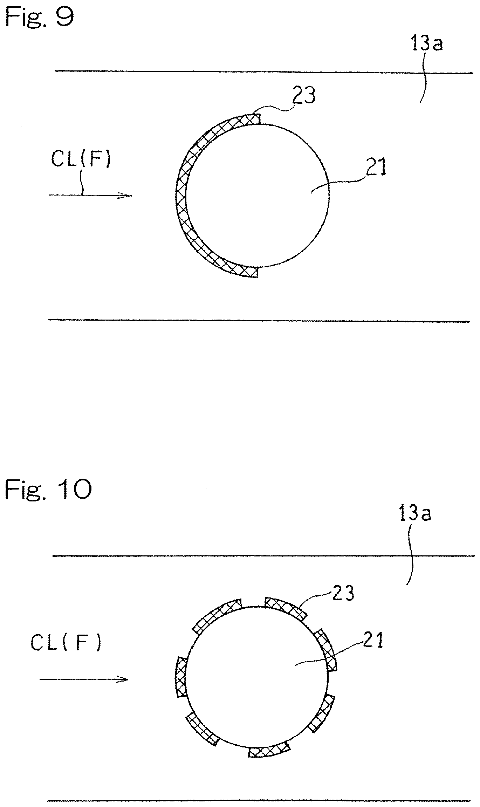

As described above, at the heat transfer enhancement portion 25 of the present embodiment, the projection 23 is formed on the peripheral edge of each recess 21, as shown in Fig. 3. In the example shown in Fig. 3, the projection 23 is provided over the entire peripheral edge of the recess 21. However, each projection 23 may be provided on at least a part of the peripheral edge of the recess 21. In other words, the projection 23 may be provided on only a part of the peripheral edge of the recess 21. For example, as shown in Fig. 9, the projection 23 may be formed on only a peripheral edge on the upstream side in the flow direction F, of the recess 21. In this example, occurrence of turbulent flow is enhanced inside the recess 21. Alternatively, the projection 23 may be formed on only a peripheral edge on the downstream side in the flow direction F, of the recess 21. In this example, occurrence of turbulent flow is enhanced at the downstream part of the recess 21.

As shown in Fig. 10, the projection 23 may be intermittently provided over the entire peripheral edge of each recess 21. The configuration of the projection 23 in the case where the projection 23 is provided on only a part of the peripheral edge of the recess 21 is not limited to the above examples. Each of the width and the protruding height of the projection 23 may be uniform, or may be uneven continuously or discontinuously. From the perspective of effectively causing turbulent flow of the cooling medium CL, preferably, the ratio of the height of the projection relative to the depth of the recess is not less than 5% and not greater than 50%, and more preferably, not less than 10% and not greater than 40%. In Figs. 3, 9, 10, the formations of the projections 23 have been described using the recesses 21 having substantially circular shapes in plan view as an example. Such configurations of the projection 23 may be applied also to the recesses 21 having other shapes in plan view, including the shapes shown in Figs. 4 to 6, in the same manner.

In the gas turbine engine cooling structure according to the present embodiment as described above, in combination with each recess 21, the projection 23 is formed on the peripheral edge thereof, whereby occurrence of turbulent flow of the cooling medium flowing into the recess 21 and flowing out from the recess 21 is enhanced, and thus excellent cooling performance is obtained.

Next, a method for manufacturing the cooling structure according to the above embodiment will be described.

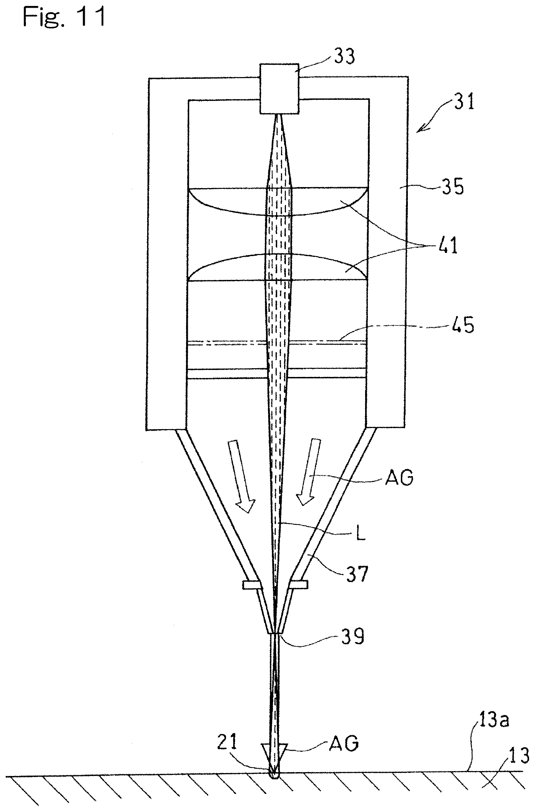

In the manufacturing method according to the present embodiment, as shown in Fig. 11, the wall surface 13a of the passage wall 13, which is formed from a part of the constituent member and faces the cooling medium passage through which the cooling medium flows, is irradiated with a laser beam L, and an assist gas AG is jetted to the area irradiated with the laser beam L, to remove melted metal, whereby the recess 21 is formed on the wall surface 13a of the passage wall 13.

In the laser irradiation device 31 shown in Fig. 11 which emits the laser beam L, the assist gas AG is introduced from an external gas source (not shown) into a cylindrical housing 35 which accommodates a laser light source 33. The housing 35 has one end portion provided with a gas nozzle 37 so as to be concentric with the light path of the laser beam L. The assist gas AG is jetted from a jetting port 39 positioned at a tip end of the gas nozzle 37. The laser beam L is emitted through the jetting port 39 of the gas nozzle 37. In the present embodiment, as the laser light source 33, an Yb fiber laser device which emits laser light in a near infrared region is used.

In the shown example, a focal point of the laser beam L emitted from the laser light source 33 is adjusted to be at the position of the jetting port 39 of the gas nozzle 37 with a condenser lens 41 provided in the housing 35. The distance from the laser irradiation device 31 adjusted as described above to the laser beam irradiated surface, which is the wall surface 13a of the passage wall 13, is adjusted to perform defocusing, whereby an irradiation diameter on the laser beam irradiated surface can be adjusted. The adjustment of the irradiation diameter on the laser beam irradiated surface may be performed by, instead of defocusing, using an optical system including the condenser lens 41 in the housing 35, for example. By adjusting the irradiation diameter, the irradiation time, and the laser output, it is possible to optionally adjust the plan-view diameter and depth of the recess 21. In the present embodiment, the irradiation distance of the laser beam (distance from the jetting port 39 to the wall surface 13a) is adjusted in a range of 20 mm to 80 mm, the laser output is adjusted in a range of 1000 W to 8000 W, and the irradiation time is adjusted in a range of 30 milliseconds to 500 milliseconds. However, those parameters are not limited to the above ranges.

By removing the metal melted by irradiation of the laser beam L using the assist gas AG jetted to the irradiated area, the recess 21 is formed at the irradiated area. In addition, the melted metal removed from the irradiated area remains on the peripheral edge of the recess 21 and is solidified to form the projection 23 shown in Fig. 2. In other words, by adjusting the flow rate of the assist gas AG, the melted metal removed by jetting the assist gas AG is caused to remain on at least a part of the peripheral edge of the recess 21, whereby the projection 23 can be formed. In the present embodiment, as the assist gas AG shown in Fig. 11, for example, an inert gas such as argon gas is used. In the present embodiment, the flow rate of the assist gas is adjusted in a range of 20 L/min to 80 L/min. However, the flow rate is not limited to this range.

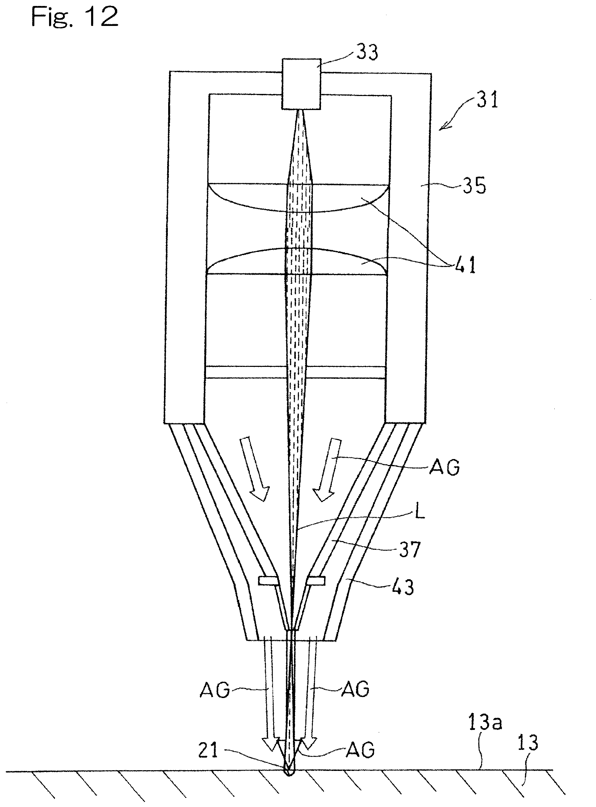

As shown in Fig. 12, an auxiliary gas nozzle 43 that encircles the gas nozzle 37 may be provided so that the laser irradiation device 31 has a double nozzle structure. Using the laser irradiation device 31 having such a double nozzle structure, the assist gas AG is further jetted from the auxiliary gas nozzle 43 on the outer side of the gas nozzle 37, thereby suppressing a phenomenon in which the assist gas AG jetted from the gas nozzle 37 draws the ambient air and the air is mixed into the assist gas AG which is to be jetted to the irradiated area. Thus, oxidation of the melted metal can be prevented.

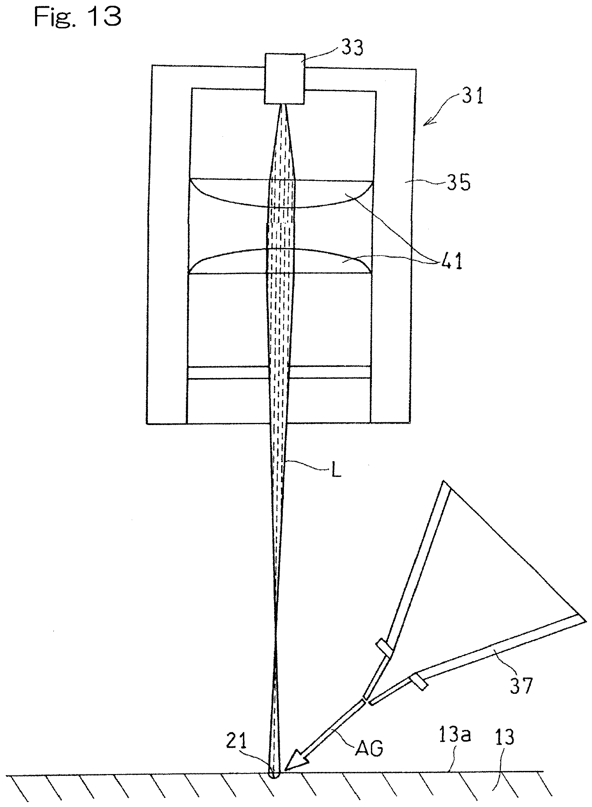

Figs. 11 and 12 show the configuration examples in which the gas nozzle 37 is provided integrally with the housing 35 of the laser irradiation device 31, and the irradiation direction of the laser beam L and the jetting direction of the assist gas AG are set to coincide with the direction substantially perpendicular to the laser beam irradiated surface. However, the irradiation direction of the laser beam L and the jetting direction of the assist gas AG are not limited to those examples. For example, the irradiation direction of the laser beam L may be inclined with respect to the wall surface 13a so that the recess 21 having a teardrop shape as shown in Fig. 4 can be formed. As shown in Fig. 13, the assist gas AG may be jetted in a direction inclined with respect to the wall surface 13a of the passage wall 13 from the gas nozzle 37 provided separately from the housing 35 of the laser irradiation device 31, so that the projection 23 can be formed on only a part of the peripheral edge of the recess 21 as shown in Fig. 9.

By performing scanning by the laser irradiation device 31 while irradiating the wall surface 13a with the laser beam L, it is possible to form the groove-like recesses 21 having various shapes in plan view exemplified in Fig. 5. As indicated by a dotted-dashed line in Fig. 11, a beam shape forming member 45 such as an optical diffraction grating may be provided on the optical path of the emitted laser beam L. By irradiating the wall surface 13a of the passage wall 13 with the laser beam L via the beam shape forming member 45, it is possible to form the recess 21 having an arbitrary shape in plan view, e.g., the aforementioned star shape in plan view.

After the recesses 21 and the projections 23 are formed on the wall surface 13a by the laser irradiation device 31, the surface of each recess 21 may be subjected to blasting. In this way occurrence of a crack in the surface of the recess 21 formed by solidification of melted metal can be effectively prevented.

As described above, the cooling structure manufacturing method according to the present embodiment can easily form the recess 21 by performing irradiation with the laser beam L and jetting the assist gas AG to metal melted by the irradiation. In addition, by adjusting the condition for jetting the assist gas AG, it is possible to form the projection 23 around the recess 21. In addition, by adjusting the laser irradiation condition, the recess 21 having an arbitrary shape is easily obtained. Further, since the process is performed using laser, it is possible to form recesses/projections easily and within a short time on not only a plate-like constituent member but also various types of members such as rod-like constituent member or molded product. The cooling structure manufacturing method according to the present embodiment is applicable also to the case of providing only the recesses 21.

In the above embodiments, the combustor liner 5 has been described as an example of a constituent member, of the gas turbine GT, that is a cooling target. However, such a constituent member that is a cooling target may be any other member as long as the constituent member can be cooled by convection using the working gas of the gas turbine engine as a cooling medium. For example, a combustor tail pipe (transition duct) or a scroll for guiding combustion gas from a combustor to a turbine, a turbine shroud covering the outer circumferential side of a turbine blade, and the like are applicable.

Although the present invention has been described above in connection with the preferred embodiments with reference to the accompanying drawings, numerous additions, changes, or deletions can be made without departing from the gist of the present invention. Accordingly, such additions, changes, or deletions are to be construed as included in the scope of the present invention.

### [Reference Numerals]

- 5 ····: Combustor liner (constituent member)
- 13 ····: Passage wall
- 13a ····: Wall surface of passage wall
- 21 ····: Recess
- 23 ····: Projection
- A ····: Air (Working gas)
- AG ····: Assist gas
- CL ····: Cooling medium
- F ····: Flow direction of cooling medium
- L ····: Laser beam
- GT ····: Gas turbine engine

## Claims

1. A gas turbine engine cooling structure for cooling a constituent member of a gas turbine engine using a working gas of the gas turbine engine as a cooling medium, the gas turbine engine cooling structure comprising:
a passage wall formed from a part of the constituent member and facing a cooling medium passage through which the cooling medium flows;
a recess formed on a wall surface of the passage wall; and
a projection formed on at least a part of a peripheral edge of the recess.

2. The gas turbine engine cooling structure as claimed in claim 1, wherein the projection is formed on only a peripheral edge, of the recess, that is positioned on an upstream side in a flow direction of the cooling medium.

3. The gas turbine engine cooling structure as claimed in claim 1, wherein the projection is formed on only a peripheral edge, of the recess, that is positioned on a downstream side in a flow direction of the cooling medium.

4. A manufacturing method for manufacturing a structure for cooling a metallic constituent member of a gas turbine engine using a working gas of the gas turbine engine as a cooling medium, the method comprising
irradiating, with a laser beam, a passage wall that is formed from a part of the constituent member and faces a cooling medium passage through which the cooling medium flows, and jetting an assist gas to an area irradiated with the laser beam, to remove melted metal, thereby forming a recess on a wall surface of the passage wall.

5. The manufacturing method as claimed in claim 4, further comprising
causing the melted metal removed by jetting the assist gas to remain on at least a part of a peripheral edge of the recess, thereby forming a projection.

6. The manufacturing method as claimed in claim 5, comprising
jetting the assist gas in a direction inclined with respect to the wall surface of the passage wall, so as to form the projection on only a part of the peripheral edge of the recess.

7. The manufacturing method as claimed in any one of claims 4 to 6, wherein the passage wall is irradiated with the laser beam via a beam shape forming member.

8. The manufacturing method as claimed in any one of claims 4 to 7, further comprising performing blasting on a surface of the recess.
